# EUROPÄISCHE PATENTSCHRIFT

(11) **EP 2 283 537 B1**
(45) Veröffentlichungstag und Bekanntmachung des Hinweises auf die Patenterteilung: **12.02.2014**
(21) Anmeldenummer: 09761312.9
(22) Anmeldetag: 04.06.2009
(51) Int. Cl.: H01M 2/20, H01M 10/04, H01M 10/42, H01M 10/44, H01M 10/48, H02J 7/00

(54) **BATTERIE MIT BATTERIEZELLEN UND LADUNGSAUSGLEICHSVORRICHTUNG UND MITEINANDER VERSCHWEISSTEN POLANSCHLÜSSEN**
BATTERY WITH BATTERY CELLS AND CHARGE COMPENSATION APPARATUS AND POLE CONNECTIONS WHICH ARE WELDED TO ONE ANOTHER
BATTERIE COMPRENANT DES CELLULES DE BATTERIE ET UN DISPOSITIF D ÉQUILIBRAGE DE LA CHARGE ET DES BORNES POLAIRES SOUDÉES ENTRE ELLES

(30) Priorität: 09.06.2008 DE 102008027417
(43) Veröffentlichungstag der Anmeldung: 16.02.2011
(73) Patentinhaber: TEMIC Automotive Electric Motors GmbH, 10553 Berlin (DE)
(72) Erfinder: TILLMANN, Stefan, 13469 Berlin (DE); GÜNER, Nevzat, 12107 Berlin (DE); SCHWEIZER-BERBERICH, Markus, 10625 Berlin (DE); STICHOWSKI, Torsten, 39418 Staßfurt (DE)
(74) Vertreter: Büchner, Jörg
(86) Internationale Anmeldenummer: PCT/DE2009/000768
(87) Internationale Veröffentlichungsnummer: WO 2009/149690

(56) Entgegenhaltungen:
- DE-A1- 19 705 192
- US-A1- 2003 190 520
- US-B1- 6 641 942
- US-B1- 6 773 848

## Beschreibung

Die Erfindung betrifft eine Batterie mit Batteriezellen gemäß dem Anspruch 1 und ein Verfahren zur Herstellung einer Batterie gemäß dem Anspruch 12.

Zur Kopplung und Bereitstellung eines Batteriestapels ist aus der Druckschrift DE 10 2007 046 043 A1 ein Batteriemodul und Verfahren zu dessen Herstellung bekannt. Ein derartiges Batteriemodul stellt einen Batteriezellenstapel dar und koppelt eine erste und eine zweite Batteriezelle zueinander über ein Verbindungselement aus einem Metallblech. Dieses Verbindungselement gemäß dem Stand der Technik ist aus einer Röhre geformt und weist ein Bodenteil und eine Seitenwand auf. Das Bodenteil wiederum weist ein äußeres Randelement auf, das an eine Bodenwand des Batteriezellengehäuses der zweiten gestapelten Batteriezelle angeschweißt ist, während ein inneres Randelement innerhalb des äußeren Randelements an eine Verschlussplatte der ersten Batteriezelle geschweißt ist. Ein derartiger Batteriestapel aus zwei aufeinander gestapelten Batteriezellen ergibt ein Batteriemodul, das aus in Serie geschalteten gestapelten Batterien besteht, wodurch die Spannung verdoppelt wird und die Speicherkapazität einer einzelnen Batteriezelle entspricht.

Ein Nachteil dieses Batteriestapels ist es, dass eine Erhöhung der Speicherkapazität durch Parallelschalten der gestapelten Batteriezellen über das offenbarte Verbindungselement nicht möglich ist.

Aus der Druckschrift US 2002/0064708 A1 ist ein Batteriemodul aus prismatischen Batteriezellen bekannt, bei dem ebenfalls eine Vielzahl von prismatischen Batteriezellen in Serie geschaltet ist, wobei positive und negative Elektroanschlussfahnen alternierend über ein Trennelement gestapelt sind und Flachleiteranschlüsse durch herausragende Abschnitte der positiven und negativen Elektroanschlussfahnen auf gegenüberliegenden Seiten miteinander verbunden sind. Dabei sind Sammelschienen auf den Flachleiterabschnitten auf beiden Seiten der Elektrodenanschlussfahnen unter Verwendung eines elektrisch leitenden Klebstoffs oder dergleichen zu Gruppen verbunden. Diese Elektrodenanschlussfahnengruppen werden wiederum seriell miteinander verbunden und anschließend werden die Zwischenräume zwischen den Sammelschienen und der Batteriewand mit einem nichtleitenden Material vergossen um die vielen Batteriezellen voneinander zu isolieren. Hier wird eine Konstruktion erreicht, die es zwar ermöglicht die elektrischen Verbindungswege zu verkürzen und dadurch den inneren Widerstand zu vermindern, jedoch kann mit dieser Verbindungstechnik lediglich die Gesamtspannung der Batterie gesteigert werden, nicht aber die Stromaufnahme- und die Stromabgabefähigkeit, d.h. die Kapazität der Batterie verbessert werden.

Aus US 6,641,942 B1 ist ein elektrochemischer Energiespeicher mit mehreren elektrochemischen Zellen, welche über eine integrierte Verbindungsplatine wahlweise in Reihe oder parallel verschaltet sind, bekannt. Die Verbindungsplatine ist zusammen mit den Zellen in einem abgedichteten Gehäuse angeordnet und umfasst einen ersten Anschluß und einen zweiten Anschluß, die jeweils mit einem ersten Pol und einem zweiten Pol des Energiespeichers gekoppelt sind. Vorteilhafterweise ermöglicht die Verbindungsplatine eine wahlweise Reihenverschaltung oder Parallelverschaltung der Zellen unabhängig von deren Position im Gehäuse.

Die Offenlegungsschrift US 2003/190520A1 zeigt eine Batterie auf Lithium-Basis mit eine Vielzahl an Mehrzelleneinheiten, welche in Reihe geschaltet sind. Jede der Mehrzelleneinheiten umfasst einen steifen Kern, um den ein Zellstapel gewunden ist. Der Zellstapel weist eine positive Verbindungsleitung und eine negative Verbindungsleitung auf. Der Zellstapel ist in einem Gehäuse untergebracht, welches einen mit der positiven Verbindungsleitung gekoppelten positiven Anschluß und einen mit der negativen Verbindungsleitung gekoppelten negativen Anschluß aufweist. Ein Ladezustandsanschluß des Gehäuses ist von dem negativen Anschluß und dem positiven Anschluß beabstandet angebracht und umfasst mehrere elektrische Leiter, die mit jeweils einer der Zellen verbunden ist.

Die Druckschrift US 6,773,848 B1 betrifft eine Zelleinheit, die zumindest zwei elektrochemische Zellen und eine Leiterplatte aufweist. Die Zellen sind auf einer oder beiden Seiten der Leiterplatte angebracht, wobei die Schaltkreise der Leiterplatte geschützt sind. Vorteilhafterweise haben die Zellen und die Leiterplatte die gleiche Länge und Breite. Die Zellen können an zwei oder mehreren Kanten der Leiterplatte angeordnet sein und zwei Zellen können an denselben Kanten auf der Leiterplatte verbunden sein. Die elektrochemischen Zellen sind an herausragenden Teilen ihrer Anschlüsse an die Leiterplatte angeschlossen.

DE 19705192 A1 beschreibt ein Oberwachungssystem für eine Batterie, die wenigstens zwei Zellen und wenigstens zwei Schalter aufweist, die zu je einer Zelle parallel geschaltet sind.

Aufgabe der Erfindung ist es, eine Batterie mit Batteriezellen und ein Verfahren zur Herstellung von Batterien zu schaffen, bei der der Innenwiderstand vermindert ist und die Möglichkeit offensteht, die Speicherkapazität durch geeignetes Stapeln von Batteriezellen beliebig zu erhöhen.

Gelöst wird diese Aufgabe mit dem Gegenstand der unabhängigen Ansprüche. Vorteilhafte Weiterbildungen der Erfindung ergeben sich aus den abhängigen Ansprüchen.

Ein derartiges Batteriekonzept hat den Vorteil, dass mit Hilfe von Standardbatteriezellen durch Stapelung der Batteriezellen unter gleichzeitiger Verbindung gleichartiger Polanschlüsse die Kapazität der Batterie beliebig erhöht werden kann und zusätzlich durch serielle Schaltung von derartigen Batteriestapeln eine nahezu unbegrenzte Spannungsvergrößerung realisiert werden kann.

Die erfindungsgemäß eingesetzte prismatische Variante von Batteriezellen kann mit einem starren Gehäuse oder mit einer flexiblen Folie pro Batteriezelle ausgestattet sein. Diese Flachzellen können über Polanschlüsse in serieller Verschaltung verbunden werden, um die Spannung und damit die Leistung des Systems zu erhöhen. Um weiterhin die Kapazität zu vergrößern, können auch jeweils mehrere Zellen parallel verschaltet werden. Während seriell bis zu einigen Tausend Zellen vorzugsweise mehrere Hundert Batteriezellen zu einer entsprechend hohen Ausgangsspannung führen, werden bis zu 50 Zellen vorzugsweise zwei bis vier Zellen parallel geschaltet und dann diese Gruppen von Zellen seriell miteinander verbunden. Für das Verbinden wird vorzugsweise die Ultraschallschweißung eingesetzt, da der Vorgang ohne großen Wärmeeintrag in die Zelle erfolgen kann. Bei zu großem Wärmeeintrag in die Zelle kann es bei Temperaturen größer 100°C zu einer irreversiblen Schädigung der Batterie kommen, wie beispielsweise ein Schmelzen und/oder Schrumpfen des Separators mit nachfolgender Kurzschlussbildung.

Bei einem Verbund von mehreren Batteriezellen zu größeren Batterieeinheiten werden vorzugsweise zur Erreichung eines langzeitstabilen Systems die Zellen laufend in ihrem Ladezustand einander angeglichen. Dieser Symmetrisierungsvorgang der Zellen kann vorzugsweise in Ruhepausen der Batterie stattfinden. Es ist jedoch auch möglich, durch geeignete Schaltungselektronik während des Gebrauchs der Batterie die Symmetrisierung durchzuführen. Ein weiterer Vorzug der erfindungsgemäßen Batterie ist, dass sie für alle Auslegungen und Nutzungen in großen Leistungsklassen, wie z.B. bei Hybridanwendungen und bei Elektroversorgungsanwendungen im Automobil sowie bei der Energieversorgung als Zwischenspeicher insbesondere bei Windenergieanlagen und bei der Fotovoltaik, aus mehreren Hundert Zellen zusammengesetzt sein kann. Diese Zellen können zur Erhöhung der Kapazität, wie oben bereits geschildert, parallel oder zur Anhebung der Spannung dann seriell geschaltet sein, so dass vorzugsweise für die Anwendung im Automobilbau Systeme mit dem erfindungsgemäßen Konzept für 400 bis 800 V kurzfristige Leistungen von mehreren Hundert kW Energie erreichbar sind.

In einer Ausführungsform sind mechanische Fertigungstoleranzen bei der Anordnung von Batteriezellen in einem Batteriegehäuse durch die Schweißverbindungen der Polanschlusspaare nahezu ausgeglichen. Dabei werden Toleranzen durch das Biegen und Schweißen über den Amboss ausgeglichen.

Für Lastkraftwagen und Energieversorgungsanlagen sind deutlich größere Systeme mit dem erfindungsgemäßen Konzept einsetzbar, wobei eine Lebensdauer von mehr als zehn Jahren erreicht werden kann. Für den Vorgang der Symmetrisierung wird, wie oben erwähnt, vorzugsweise der Ladezustand, auch SOC (state of charge) genannt, durch eine Spannungsmessung für jede einzelne Batteriezelle ermittelt. Über eine Stromintegration wird die genutzte und wieder geladene Ladungsmenge aus der Strom-Zeit-Kurve ermittelt. Als Referenz bzw. zum Rekalibrieren kann der aus der Stromintegration berechnete Wert mit der Ladespannungs-Relation der Batterie verglichen werden. Eine derartige Ladungsbestimmung erfolgt integrativ, so dass über eine lange Zeit die Messung durchzuführen ist. Um schneller eine größere Genauigkeit zu erreichen, wird vorzugsweise in Abhängigkeit der verwendeten Zellchemie eine charakteristische Ladezustands-Spannungskurve in einer Ladungsausgleichseinrichtung gespeichert und in einem Auswertealgorithmus hinterlegt. Durch den Vergleich der beiden Werte kann der Ladezustand für das Gesamtsystem der Batterie mit einer zufrieden stellenden Genauigkeit bestimmt werden.

Jedoch durch Selbstentladung, Nebenschluss, Alterung, Betriebszustandsänderungen, Temperaturänderungen usw. können sich diese Werte verschieben. Die Bestimmung des Zustands der einzelnen Batteriezelle innerhalb des Verbundes von Batteriezellen der Batterie kann jedoch nicht durch die Ladezustands-Spannungskurve sichergestellt werden. Deshalb werden erfindungsgemäß die Spannungen der Einzelzellen oder Einzelzellenstapel zusätzlich gemessen und ausgewertet. Dadurch ist es möglich, für die erfindungsgemäße Batterie speziell Lithiumionenbatteriezellen einzusetzen. Durch die Einzelüberwachung mittels CSCs (cell supervision circuits) oder mittels CSMs (cell supervision moduls) wird eine Überladung oder Überentladung der Batteriezellen verhindert, so dass keine Schädigungen der Batteriezelle und damit der Gesamtbatterie auftreten können.

Eine Voraussetzung, die erfindungsgemäß erfüllt wird, ist eine elektrisch und mechanisch sichere Kontaktierung, da ein Wackelkontakt oder eine Unterbrechung zu einem Abschalten der Batterie führen kann, zumal ein Ausfall einer Einzelspannungsmessung aus Sicherheitsgründen zum Totalausfall der Batterie führen kann. Deshalb wird der Ladezustand Langzeit stabil überwacht durch genaue Messung des Zellenpotentials. Dazu ist neben einem guten Kontakt an jeder einzelnen Batteriezelle auch eine hohe Gleichmäßigkeit des elektrischen Widerstands der jeweiligen Kontakte für die große Anzahl der Verbindungen innerhalb der Batterie und zwischen den einzelnen Batteriezellen erfindungsgemäß erfüllt.

Die Erfindung ermöglicht, die Herstellung der Kontakte zwischen den Überwachungsschaltkreisen bzw. den Überwachungsschaltmodulen und den Batteriezellen zu automatisieren. Dabei wurde erfindungsgemäß ein hoher Wert auf Arbeitssicherheit gelegt, zumal die Zellen beim Verbindungsvorgang schon teilgeladen sind. Bei einem größeren Zellverbund treten mehrere 100 V (Volt) an Potentialunterschieden zwischen den Bauteilen auf. Die Zellen können dabei sehr hohe Ströme liefern, so dass ein Fehler zu einer ernsthaften Gefahr für den Mitarbeiter und für die Werkzeuge werden kann. Erfindungsgemäß wird ein Verfahren vorgeschlagen, bei dem der elektrische Schutz sichergestellt ist.

Für die Elektronik der erfindungsgemäßen Batterie sind entweder einzelne Zellüberwachungsschaltkreise für jede einzelne Batteriezelle vorgesehen oder eine abgestimmte Anzahl von Zellen wird durch ein Zellüberwachungsmodul geprüft. Ein Zellüberwachungsmodul weist dann eine Anzahl von Zellüberwachungsschaltkreisen auf, die mit den zugehörigen elektrischen Kommunikationsverbindungen und den Zellkontaktierungen zusammengefasst sind. Die Zellüberwachungsmodule können auch mit zusätzlichen mechanischen Komponenten wie mit dem Gehäuse zum Schutz vor Feuchtigkeit und mechanischer Beschädigung sowie den Anbindungselementen an die Batteriemodule ausgestattet sein. Die Ausführung der Zellüberwachungsmodule wird durch die Anwendung und das Design der Batterien bestimmt und ergibt eine Vielfalt von Modifikationen der vorliegenden Erfindung.

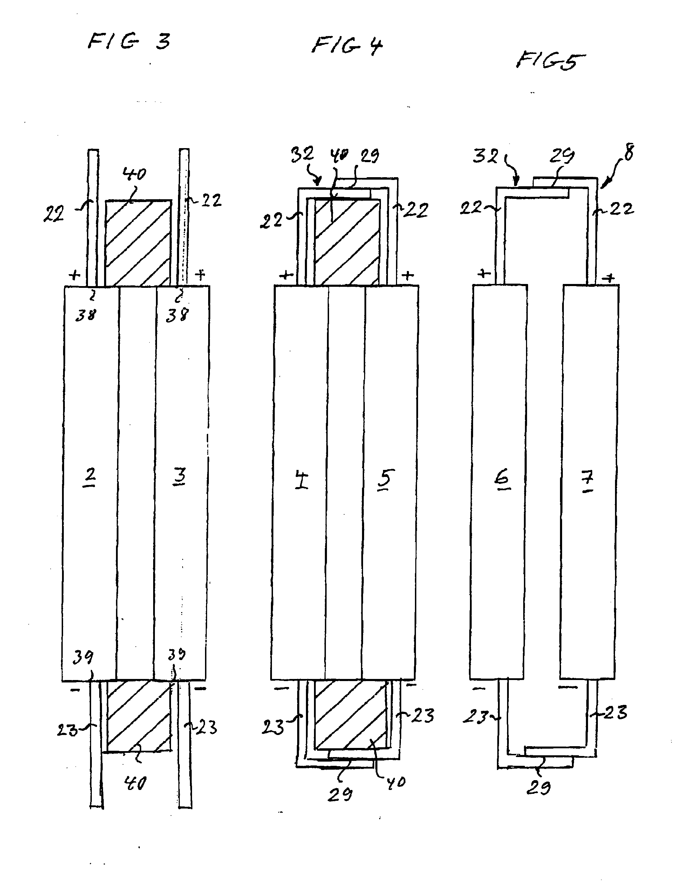

Die Verschaltung der Batteriezellen zu Batteriestapeln und zu Batteriemodulen erfolgt mittels Zellverbindern und Verschweißen von Batteriepolen. Da bei erfindungsgemäß eingesetzten prismatischen Batteriezellen die Polanschlüsse typischerweise Folienableiter sind, ist es möglich, eine zuverlässige niederohmige Verbindung sowohl für eine serielle als auch für eine parallele Verschaltung der Batteriezellen sicherzustellen. Dabei werden erfindungsgemäß bei der Parallel- und Serienverschaltung die entstehenden flächigen verschweißten Hohlanschlüsse zusätzlich mit der Überwachungselektronik verbunden. Dazu weist vorzugsweise die Batterie zu jeder Batteriezelle eine Ladungsausgleichsleitung zur Erfassung und zum Ausgleich des Ladezustands auf. Diese Ladungsausgleichsleitung wird nach der Verschweißung der Polanschlüsse mit geringer Schweißleistung auf die flächigen Verbindungen aufgebracht. Die Verschweißung der großflächigen Polanschlüsse, Kontaktflächen zwischen 20 und 350 mm², erfolgt dadurch, dass zunächst die Polanschlüsse in Form von Folienzellableitern senkrecht nach oben stehen. Ein Amboss einer Ultraschallanlage wird zwischen den Batteriezellen positioniert und die Polanschlüsse der zu verbindenden Batteriezellen werden flach über den Amboss gebogen. Dieses kann per Hand mit einem Werkzeug oder über einen automatisch gesteuerten Mechanismus erfolgen. Auf diese flach umgelegten Polanschlüsse wird dann die Ultraschallsonde von oben aufgesetzt zur Einbringung von Energie des Ultraschallanregers, wodurch die aufeinander liegenden Polanschlüsse flächig verschweißt werden. Dabei entstehen die in den Figuren 3 bis 6 dargestellten U-förmigen Verbindungen der Batteriezellen. Diese Verschweißung kann Zellenpaar für Zellenpaar durchgeführt werden.

Das Ultraschallschweißen bietet durch die stoffschlüssige Verbindung einen extrem niedrigen Kontaktwiderstand und eine hohe mechanische Stabilität. Die Verbindungen der Polanschlüsse sind auch besonders alterungsbeständig und zeigen anders als geschraubte Verbindungen keinen Anstieg des Kontaktwiderstands mit zunehmender Nutzungsdauer der Batterie. Die mechanische Stabilität ist bei geeignet gewählten Parametern so groß, dass im Zugtest und bei Schältest das Folienmaterial reißt, bevor die Schweißstelle wieder getrennt wird. Typisch sind dabei Werte von bis zu mehreren Tausend N Zugkraft. Neben einer Verbindung von zwei übereinander geschweißten Folien können auch vier, sechs oder mehr Lagen von folienartigen Polanschlüssen miteinander verschweißt werden. Eine derartige Konfiguration tritt z.B. bei serieller Verschaltung von parallel angeordneten Zellen auf. Dieser Verbund kann für solch große Flächen nur in mehreren Stufen erfindungsgemäß erfolgen. Diese Stufen bzw. Schritte umfassen nachfolgende Maßnahmen. Zunächst werden die Polanschlüsse der ersten beiden zu verbindenden Batteriezellen über einen Amboss mit anschließender Vorverschweißung der Polanschlüsse gebogen. Anschließend kann das Umlegen des nächsten Polanschlusspaares der weiteren Zellen mit anschließendem Vorverschweißen der Polanschlüsse erfolgen. Abschließend erfolgt eine Hauptverschweißung der beiden vorgeschweißten Polanschlusspaare zu einem mehrlagigen Verbund. Diese Hauptverschweißung kann mit einem einzigen Schweißvorgang sowohl parallele als auch serielle Verbindungen der Batteriezellen miteinander realisieren.

Durch das Umbiegen der Polanschlüsse über einen Amboss der Ultraschallanlage wird die Ebene der zu verschweißenden Flächen automatisch auf der Oberseite des Amboss erfolgen. Dieses hilft die Toleranzen, die vorher beim Aufkleben der Batteriezellenpaare auf entsprechende Kühlplatten, oder durch eventuelle Ungenauigkeiten der Batteriezellendimensionen oder beim Einbringen der Batteriezellen in ein Batteriegehäuse entstehen, auszugleichen.

Wie bereits eingangs erwähnt, bestehen die Batterien aus einer großen Anzahl zu überwachender und zu symmetrierender Batteriezellen. Idealerweise befinden sich die Batteriezellen in einem Batteriezellengehäuse, das die mechanische und elektrische Einheit jeder einzelnen Batteriezelle sicherstellt. Diese Batteriezellengehäuse sind, wie oben beschrieben, zur Entnahme der Energie elektrisch verschaltet. Die Oberseite der bei der Verschweißung der Polanschlüsse entstehenden Flächen kann erfindungsgemäß zusätzlich genutzt werden, um daran Abgriffe wie Kabel, Flachleiter oder dünne Metallkontakte für die Zellüberwachungselektronik anzubringen. Voraussetzung für das Anbringen derartiger Abgriffe für die Zellüberwachungselektronik ist eine genaue Positionierung der Zellverbindung, wie sie durch den oben beschriebenen Vorgang erfindungsgemäß erfolgt ist.

Danach kann nun das Auflegen der Abgriffe in Form von Kabeln, Flachleitern oder dünnen Metallkontakten für die Überwachungselektronik auf diese bereits bestehende flache Ultraschallschweißverbindung aufgelegt werden. Dann wird erneut ein Amboss eingeführt, der für die Angriffsverschweißung etwas kleiner ist als der Amboss für die Hauptverschweißung, um in die vorhandene U-förmige Verbindung zu passen. Schließlich wird die Ultraschallsonde aufgesetzt, die flach oder als Nase ausgeführt sein kann. Die nasenförmige Ultraschallsonde wird bei Platinen benutzt, um in eine Aussparung zu greifen, in der sich Kabelflachleiter, Metallfolie oder ein anderer Metallkontakt befinden. Da bei dieser Verschweißung deutlich kleinere Flächen benötigt werden, im Bereich von 5 bis 50 mm², kann mit relativ kleiner verminderter Energie um 50 bis 250 mW gearbeitet werden, welche die vorherige Schweißung des Hauptkontaktes nicht mehr beeinflussen kann, zumal nur etwa 10% der Energie der Polanschlussschweißung für die Anschweißung der Abgriffe für die Ladungsausgleichsleitungen benötigt werden.

Die mit den Batteriezellen durch die Abgriffskontaktierung verbundene Elektronik kann entweder auf einer Platine angeordnet sein oder die gesamten Schaltungen enthalten oder eine Platine aufweisen, welche die nötigen Verbindungen zu entsprechenden Steckern zusammenführt, auf die dann die Kontrollelektronik gesteckt wird. Erfindungsgemäß ist zwischen den Schnittstellen ein Kabelbaum vorgesehen, der in einem Kunststoffbauteil gesammelt und geführt ist und es ermöglicht, eine Schnittstellenplatine zu erreichen, welche auch Kontakte für die Verbindung zu den Batteriezellen und zu den Steckkontakten und/oder zu den Überwachungselektroniken ermöglicht.

Zusammenfassend ist festzustellen, dass die Erfindung die serielle und parallele Verschaltung von Zellen in einem einzigen Vorgang bei guter Kontrolle der Toleranzen ermöglicht. Die Verbindungsstellen der Hauptverbindung sind die Basis für die Verbindung zur Kontrollelektronik. Alle Verbindungen werden mit Ultraschall verschweißt, um eine hohe Festigkeit, einen geringen Widerstand und eine verbesserte Langzeitbeständigkeit zu gewährleisten. Außerdem können mit dem erfindungsgemäßen Konzept Toleranzen besonders gut aufgefangen werden, die sich im Laufe der Herstellung der Batterie ergeben. Dabei bieten alle Fertigungsschritte die Möglichkeit, automatisiert zu werden, was eine hohe Gleichmäßigkeit der Verbindungen, kurze Prozesszeiten und geringe Bauhöhen der Verbindungen der Batteriezellen untereinander sowie der Verbindung der Batteriezellen zu der Kontrollelektronik sicherstellt.

Somit ergibt sich ein raumoptimierter Batterieaufbau mit prismatischen Batteriezellen in Folienverpackung, bei dem ein Ultraschallschweißverfahren eingesetzt wird, um die Polanschlüsse miteinander seriell und/oder parallel elektrisch zu verbinden. Die Verschweißung der Polanschlüsse direkt miteinander macht die Nutzung eines Verbinders, wie es in herkömmlichen Batterien üblich ist, überflüssig, wodurch Verbindungsstellen, Kontaktflächen und Gewicht eingespart werden können.

Der automatisierte Prozess der Verschweißung der Batteriezellen erfolgt in einer Abfolge, die zunächst ein Umbiegen der Polanschlüsse jeder einzelnen Batteriezelle durch einen automatischen Greifer aufweist. Danach wird die Vorschweißung zur Fixierung mehrerer Polanschlüsse aneinander durchgeführt. Anschließend kann das Umbiegen der Polanschlüsse einer zweiten Batteriezelle durch einen automatischen Greifer erfolgen und erneut ein Vorschweißen der Polanschlüsse der zweiten Zelle durchgeführt werden. Schließlich wird eine Hauptschweißung der aneinander gehefteten Polanschlüsse zur Erzeugung von seriellen und/oder parallelen Kontaktierungen der Batteriezellen erfolgen. Ein Wiederholen der Schritte kann danach durchgeführt werden, bis die ganze Batterie durchgängig kontaktiert ist. Dazu kann eine motorgesteuerte Modulaufnahme genutzt werden, die das zusammengebaute Modul in einem Gehäuse positioniert.

Die derart verbundenen Polanschlüsse können schließlich genutzt werden, um einen Abgriff für die Zellüberwachungselektronik mit Hilfe einer Ultraschallverschweißung sicherzustellen. Dazu wird unter Einsatz von Zellüberwachungsmodulen, die aus einem Interface Board bzw. einer Gesamtplatine bestehen können oder einen in Kunststoff eingegossenen Kabelbaum zur Anbringung einzelner Zellüberwachungsschaltkreise enthält, durchgeführt werden. Dazu kann vorzugsweise das Überwachungsschaltungsmodul bzw. das CSM aus einzelnen kleinen Überwachungsschaltkreisen bzw. CSCs mit Verbindungen zu einem Interface Board oder zu einem Kabelbaum oder zu einem Flexboard bestehen, die in einem Gehäuse geschützt eingebaut sind. Derartige Funktionen können jedoch auch auf einer Gesamtplatine oder Sammelplatine vereint sein, wobei diese Platine wiederum durch das Batteriegehäuse geschützt ist.

Die Erfindung wird nun anhand der beigefügten Figuren näher erläutert.
- Figur 1: zeigt eine perspektivische teilweise aufgeschnittene Ansicht einer Batterie gemäß einer ersten Ausführungsform der Erfindung;
- Figur 2: zeigt eine perspektivische teilweise aufgeschnittene Ansicht einer Batterie gemäß Figur 1 mit Zell-überwachungsmodul;
- Figuren 3 bis 6: zeigen schematische Draufsichten auf Batteriezellen vor und nach einem Verschweißen zu Batteriezellenpaaren;
- Figur 3: zeigt eine schematische Draufsicht auf zwei Batteriezellen mit eingebrachtem Amboss einer Ultraschallschweißanlage;
- Figur 4: zeigt eine schematische Draufsicht auf die Batteriezellen gemäß Figur 3 nach Umkanten von Polanschlüssen;
- Figur 5: zeigt eine schematische Draufsicht auf die Batteriezellen gemäß Figur 4 nach flächigem Verschweißen der abgekanteten Polanschlüsse;

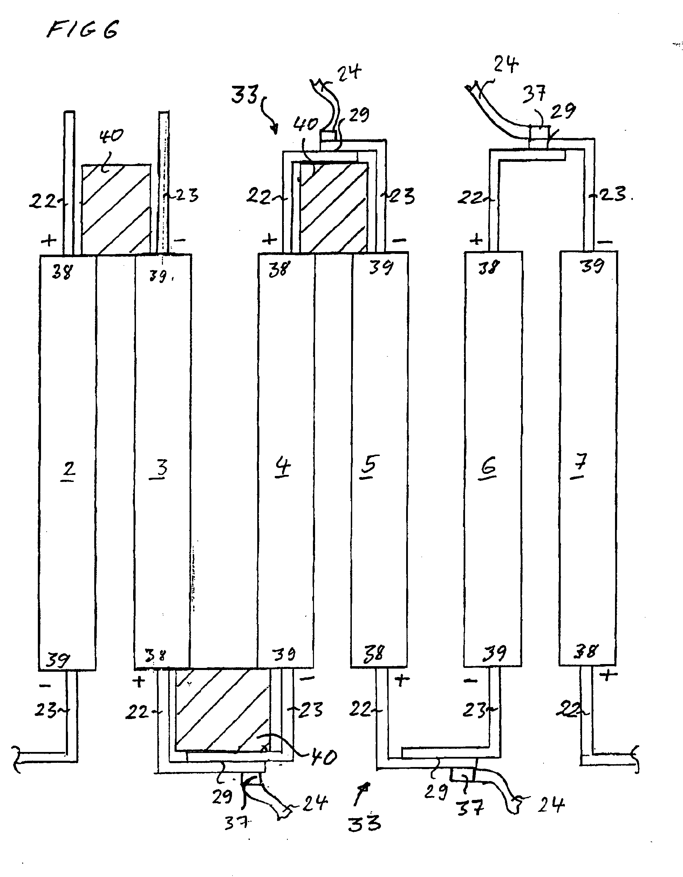

- Figur 6: zeigt eine schematische Draufsicht auf eine seriell verschweißte Gruppe von Batteriezellen.

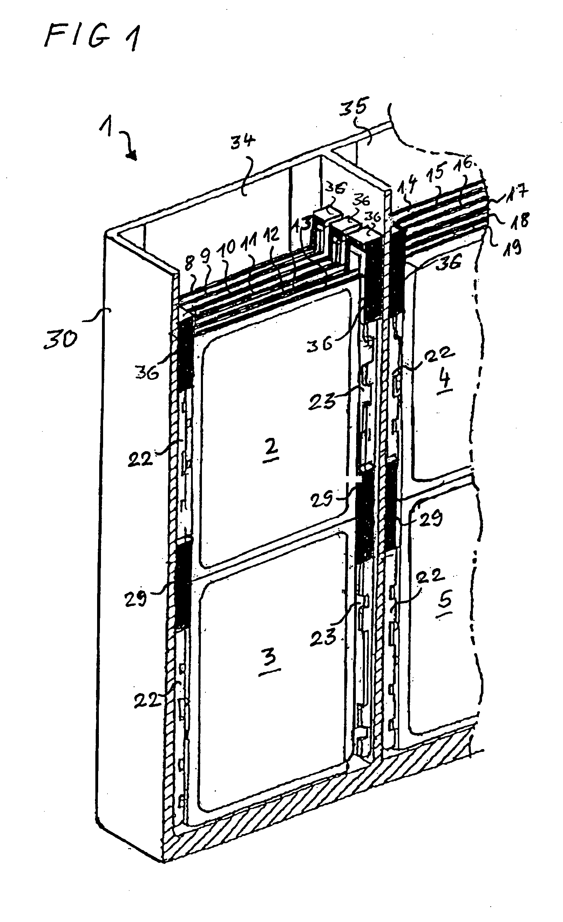

Figur 1 zeigt eine perspektivische teilweise aufgeschnittene Ansicht einer Batterie 1 gemäß einer ersten Ausführungsform der Erfindung. Die Batterie 1 weist ein Gehäuse 30 auf, in dem in einzelnen Abteilungen 34 und 35 Gruppen von Batteriezellen 2 und 3 bzw. 4 und 5 angeordnet sind. Jeweils zwei Batteriezellen 2 und 3 bilden einen parallel geschalteten Batteriezellenstapel, wobei in dem Ausschnitt des Batterieabteils 34 die Batteriezellenstapel 8 bis 13 zu sehen sind. Die positiven Polanschlüsse 22 eines jeden Batteriezellenstapels 8 bis 13 sind über Schweißverbindungen 29 gleichpolig miteinander verbunden, so dass die Speicherkapazität gegenüber Batterien mit nur einer einzelnen Batteriezelle, verdoppelt ist.

Im oberen Bereich der Batterieabteile 34 und 35 sind die Batteriezellenstapel 8 bis 13 im Batterieabteil 34 seriell geschaltet, indem ungleiche Polanschlüsse über die Schweißverbindungen 36 miteinander verschweißt sind. Dazu sind die Batteriezellenstapel 8 bis 13 gegeneinander um jeweils 180° verdreht und hintereinander angeordnet. Während somit der Batteriezellenstapel 13 auf seinem linken Rand die positiven Polanschlüsse miteinander verbunden hat sind die gegenüberliegenden negative Polanschlüsse des Batteriezellenstapels 12 auf der linken Seite miteinander verbunden. Auf der rechten Seite weist der Batteriestapel 12 einen positiven Polabschnitt auf. Das Gleiche gilt für die Batteriezellenstapel 14 bis 19 in dem hier dargestellten zweiten Batterieabteil 35.

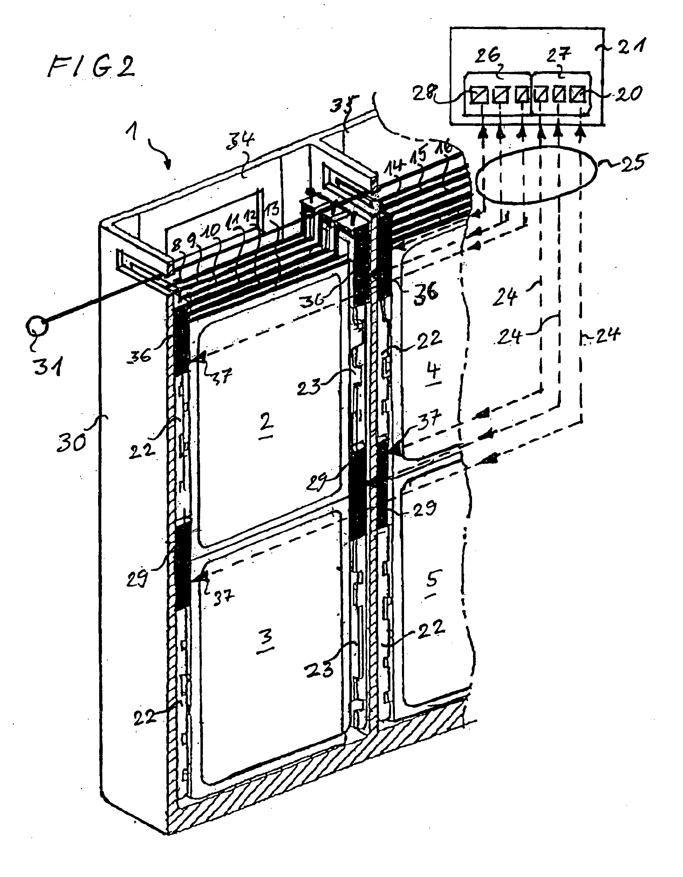

Figur 2 zeigt eine perspektivische teilweise aufgeschnittene Ansicht der Batterie 1 gemäß Figur 1 mit Zellüberwachungsmodul. Komponenten mit gleichen Funktionen wie in Figur 1 werden mit gleichen Bezugszeichen gekennzeichnet und nicht näher erläutert. Das Gehäuse 30 weist mehrere Öffnungen auf, beispielsweise für einen ersten Außenanschluss 31 und für eventuelle Vielfachstecker zum Anschluss einer Vielzahl von Ladungsausgleichsleitungen, die zu einer zentralen Ladungsausgleichseinrichtung führen können. In dieser in Figur 2 gezeigten Ausführungsform ist es jedoch vorgesehen, an jeder Batteriezelle 2, 3, 4 und 5 einen Abgriff 37 einer Ladungsausgleichsleitung 24 anzuordnen und aufzuschweißen, wobei die unterschiedlichen Ladungsausgleichsleitungen 24 in einem Kabelbaum 25 vereinigt werden und Zellüberwachungsmodule 26 und 27 zugeführt werden, die ihrerseits Sensoren 20 und Zellüberwachungsschaltkreise 28 aufweisen, wobei diese Komponenten der Zellenüberwachung gemeinsam in einer Ladungsausgleichseinrichtung 21 angeordnet sein können, wobei diese Ladungsausgleichseinrichtung eine zentrale Steuerplatine der Batterie bildet.

Die Figuren 3 bis 6 zeigen schematische Draufsichten auf Batteriezellen vor und nach einem Verschweißen zu Batteriezellenpaaren.

Figur 3 zeigt eine schematische Draufsicht auf zwei Batteriezellen für eine Parallelschaltung mit eingebrachtem Amboss einer Ultraschallschweißanlage. In Figur 3 sind die beiden Lithiumionen-Batteriezellen 2 und 3 noch nicht elektrisch miteinander zu einem Batteriezellenpaar oder zu einem Batteriezellenstapel verbunden. Während aus den Seiten 38 positive Polanschlüsse 22 herausragen, ragen aus den gegenüberliegenden Seiten 39 der Batteriezellen 2 und 3 negative Polanschlüsse 23 heraus. Zwischen den Polanschlüssen 22 bzw. 23 wird ein Amboss 40 einer Ultraschallschweißanlage positioniert und die Polanschlüsse 22 bzw. 23 werden jeweils zu dem Amboss 40 hin abgekantet, wie es Figur 4 zeigt.

Figur 4 zeigt eine schematische Draufsicht auf die Batteriezellen gemäß Figur 3 nach Umkanten von Polanschlüssen 22 bzw. 23 auf dem Amboss 40. Bei diesem Abkanten kommen die Enden der Polanschlüsse 22 bzw. 23 gleichpolig aufeinander zu liegen, so dass die positiven Pole und die negativen Pole nun zur Erhöhung der Kapazität der herzustellenden Batterie parallel geschlossen werden. Eine Ultraschallelektrode wird auf diese abgekanteten Polanschlüsse 22 und 23 gepresst, so dass sich eine stoffschlüssige Schweißverbindung 29 bildet, wobei danach der Amboss 40 wieder herausgezogen werden kann und sich die in Figur 5 gezeigte Struktur von einer Oberseite des nun paarig verbundenen Batteriezellenstapels 8 in Parallelschaltung 32 ergibt. Die Vorteile dieser Struktur wurden eingangs bereits erörtert. Selbstverständlich kann auch auf einer derartigen Schweißverbindung ein Abgriff für Ladungsausgleichsleitungen fixiert werden.

Figur 6 zeigt eine schematische Draufsicht auf eine seriell verschweißte Gruppe von Batteriezellen 2 bis 7. Im Unterschied zu den vorhergehenden Figuren sind hier die Batteriezellen 2 bis 7 über ihre Stirnseiten und die daraus herausragenden Polanschlüsse 22 und 23 zu einer Serienschaltung 33 verbunden. Dabei sind die ersten beiden Batteriezellen 2 und 3 noch nicht miteinander gekoppelt, sondern lediglich ein Amboss 40 einer Ultraschallanlage ist zwischen dem positiven Polanschluss 22 der Batteriezelle 2 und dem negativen Polanschluss 23 der Batteriezelle 3 angeordnet. Der positive Polanschluss 22 der Batteriezelle 3 ist bereits mit dem negativen Polanschluss 23 der Batteriezelle 4 über einen weiteren Amboss 40 zueinander verkantet, so dass mit Hilfe einer Ultraschallelektrode diese beiden gegenpoligen Polanschlüsse 22 und 23 miteinander stoffschlüssig verbunden werden können. Dieses gilt auch für den positiven Polanschluss 22 der Batteriezelle 4, der mit Hilfe der Ultraschallanlage bereits mit dem negativen Polanschluss 23 der Batteriezelle 5 stoffschlüssig verschweißt ist und eine Schweißverbindung 29 gebildet hat. Auch die seriellen Verbindungen zwischen der Batteriezelle 5, 6 und 7 sind bereits vorhanden. Auf die Polanschlusspaare sind zusätzlich mittels vermindertem Energieeintrag Abgriffe 37 für Ladungsausgleichsleitungen 24 angeschweißt.

### Bezugszeichenliste

- 1: Batterie
- 2: Batteriezelle
- 3: Batteriezelle
- 4: Batteriezelle
- 5: Batteriezelle
- 6: Batteriezelle
- 7: Batteriezelle
- 8: Batteriezellenstapel
- 9: Batteriezellenstapel
- 10: Batteriezellenstapel
- 11: Batteriezellenstapel
- 12: Batteriezellenstapel
- 13: Batteriezellenstapel
- 14: Batteriezellenstapel
- 15: Batteriezellenstapel
- 16: Batteriezellenstapel
- 17: Batteriezellenstapel
- 18: Batteriezellenstapel
- 19: Batteriezellenstapel
- 20: Sensor
- 21: Ladungsausgleichseinrichtung
- 22: Polanschluss
- 23: Polanschluss
- 24: Ladungsausgleichsleitung
- 25: Kabelbaum
- 26: Zellüberwachungsmodul
- 27: Zellüberwachungsmodul
- 28: Zellüberwachungsschaltkreis
- 29: Schweißverbindung
- 30: Batteriegehäuse
- 31: Außenanschluss
- 32: Parallelschaltung
- 33: Serienschaltung
- 34: Batterieabteil
- 35: Batterieabteil
- 36: Schweißverbindung
- 37: Abgriff mit Ladeausgleichsleitung
- 38: Seite
- 39: Seite
- 40: Amboss

## Patentansprüche

1. Batterie mit Batteriezellen (2 bis 7) aufweisend:
- eine Vielzahl von in Serie geschalteter Batteriezellenstapel (8 bis 19), wobei ein Batteriezellenstapel (8 bis 19) eine einzige Batteriezelle oder parallel geschaltete Batteriezellen (2, 3; 4, 5) aufweist;
- Sensoren (20) zur Überwachung des Ladezustands einzelner Batteriezellen (2 bis 7) oder einzelner Batteriezellenstapel (8 bis 19) oder einzelner Paare von Batteriezellen-(2, 3 ; 4, 5) oder einzelner Paare von Batteriezellenstapel (8, 9; 10, 11) und
- eine Ladungsausgleichseinrichtung (21);
wobei die Ladungsausgleichseinrichtung (21) eine Zielwerttabelle des zulässigen Ladezustands einzelner Batteriezellen (2 bis 7) aufweist und mit den Sensoren zur Überwachung des Ladezustands in Verbindung steht und Mittel zum Unterbrechen des Ladungsausgleichs bei Erreichen eines Zielwertes für den Ladezustand einzelner Batteriezellen (2 bis 7) aufweist, wobei Polanschlüsse (22, 23) der Batteriezellen (2 bis 7) oder der Batteriezellenstapel (8 bis 19) paarweise über Schweißflächen miteinander verschweißt sind, und wobei Ladungsausgleichsleitungen mit den Schweißflächen elektrisch in Verbindung stehen, **dadurch gekennzeichnet, dass** die paarweise verschweißten Polanschlüsse (22, 23) mit den Ladungsausgleichsleitungen eine zusätzliche Ultraschall-Schweißverbindung aufweisen, wobei die Verschweißung dieser zusätzlichen Schweißverbindung sich über eine Fläche von 5- 50 mm² erstreckt.

2. Batterie nach Anspruch 1,
**dadurch gekennzeichnet, dass**
die Ladungsausgleichseinrichtung (21) die Ladezustände der Batteriezellen (2 bis 7) steuert, so dass die Ladezustände der Batteriezellen (2 bis 7) einander angeglichen sind.

3. Batterie nach Anspruch 1 oder nach Anspruch 2,
**dadurch gekennzeichnet, dass**
in der Ladungsausgleichseinrichtung (21) eine Ladezustands-Spannungskurve des Gesamtsystems der Batterie (1) gespeichert ist.

4. Batterie nach einem der vorhergehenden Ansprüche,
**dadurch gekennzeichnet, dass**
die Serienschaltung bis zu Tausend Batteriezellen (2 bis 7), vorzugsweise bis zu Hundert Batteriezellen (2 bis 7) umfasst, und wobei die Batterie (1) bis zu 50 Batteriezellen (2 bis 7) vorzugsweise zwei bis vier Batteriezellen (2 bis 7) pro Parallelschaltung aufweist.

5. Batterie nach einem der vorhergehenden Ansprüche,
**dadurch gekennzeichnet, dass**
mechanische Fertigungstoleranzen bei der Anordnung von Batteriezellen in einem Batteriegehäuse (30) durch die paarweise verschweißten Polanschlüsse (22, 23) ausgeglichen sind.

6. Batterie nach Anspruch 5,
**dadurch gekennzeichnet, dass**
die Batteriezellen über einen Kabelbaum (25) oder über ein Flexboard oder über eine Sammelplatine mit CSMs (cell supervision moduls) oder mit CSCs (cell supervision circuits) elektrisch in Verbindung stehen.

7. Batterie nach einem der vorhergehenden Ansprüche,
**dadurch gekennzeichnet, dass**
die Batterie (1) prismatische Lithiumionenzellen aufweist.

8. Batterie nach einem der vorhergehenden Ansprüche,
**dadurch gekennzeichnet, dass**
die Batterie (1) Zellüberwachungsmodule (26, 27) aufweist, wobei ein einzelnes Zellüberwachungsmodul (26) eine integrierte Schaltung mit Zellüberwachungsschaltkreisen (28) umfasst.

9. Batterie nach einem der vorhergehenden Ansprüche,
**dadurch gekennzeichnet, dass**
Polanschlüsse (22, 23) der Batteriezellen (2 bis 7) paarweise ultraschallverschweißt sind.

10. Batterie nach Anspruch 9,
**dadurch gekennzeichnet, dass**
mehrere paarweise verschweißte Polanschlüsse (22, 23) zu vielfach verschweißten Hauptanschlüssen ultraschallverschweißt sind.

11. Batterie nach Anspruch 9 oder Anspruch 10,
**dadurch gekennzeichnet, dass**
Abgriffe für die Batteriezellenüberwachung auf die paarweise verschweißten Polanschlüsse (22, 23) ultraschallgeschweißt sind.

12. Verfahren zur Herstellung einer Batterie (1) mit einer Vielzahl von Batteriezellen (2 bis 7), wobei das Verfahren folgende Verfahrensschritte aufweist:
- Einbau von Batteriezellen in ein Batteriegehäuse (30);
- paarweises Herstellen von Schweißverbindungen (29) zwischen Polanschlüssen (22, 23) von Batteriezellen (2 bis 7), wobei gleiche Batteriezellenpolanschlüsse (22) bei Parallelschaltungen oder entgegengesetzte gepolte Batteriezellenpolanschlüsse (22, 23) zu Serienschaltungen flächig miteinander verschweißt werden;
- Herstellen eines Kabelbaums oder eines Flexboards oder einer Sammelplatine mit Batterieüberwachungsschaltkreisen (28) bzw. CSCs oder Batteriezellenüberwachungsmodulen (26, 27) bzw. CSMs einer Ladungsausgleichseinrichtung mit Ladungsausgleichsleitungen (24), die Abgriffe aufweisen;
- Anschweißen der Abgriffe der Ladungsausgleichsleitungen (24) für die Einzelüberwachung von Batteriezellen an die paarweisen Schweißverbindungen der Polanschlüsse (22, 23);
- Anschließen von Batterieaußenanschlüssen (31) an Polanschlüsse der Endzellen der Batterie, **dadurch gekennzeichnet, dass** beim Anschweißen der Abgriffe der Ladungsausgleichsleitungen eine Ultraschall-Verschweißung mit einer Fläche von 5 - 50 mm² vorgesehen wird.

13. Verfahren nach Anspruch 12,
**dadurch gekennzeichnet,** das die Ladungsausgleichseinrichtung (21) die Ladezustände der Batteriezellen (2 bis 7) derart variiert, dass die Ladezustände der Batteriezellen (2 bis 7) einander angeglichen werden.

14. Verfahren nach Anspruch 12 oder Anspruch 13,
**dadurch gekennzeichnet, dass**
in der Ladungsausgleichseinrichtung (21) eine Ladezustands-Spannungskurve des Gesamtsystems der Batterie (1) gespeichert wird.

15. Verfahren nach einem der Ansprüche 12 bis 14,
**dadurch gekennzeichnet, dass**
bis zu Tausend Batteriezellen (2 bis 7), vorzugsweise bis zu Hundert Batteriezellen (2 bis 7) in Serienschaltung (33) und bis zu 50 Batteriezellen (2 bis 7) vorzugsweise zwei bis vier Batteriezellen (2 bis 4) in Parallelschaltung (32) zueinander verschweißt werden.

16. Verfahren nach einem der Ansprüche 12 bis 15,
**dadurch gekennzeichnet, dass**
jede Batteriezelle (2 bis 7) über einen Kabelbaum (25), über ein Flexboard oder über eine Sammelplatine zur Erfassung und/oder zum Ausgleich des Ladezustands der Batteriezelle (2 bis 7) mit CSMs oder CSCs verbunden wird.

17. Verfahren nach einem der Ansprüche 12 bis 16,
**dadurch gekennzeichnet, dass**
als Batteriezellen (2 bis 7) Lithiumionenzellen als Flachzellen in einer Aluminium-Verbundfolienverpackung eingesetzt werden, deren Ladezustände von Zellüberwachungsschaltkreisen (28) erfasst und angeglichen werden.

18. Verfahren nach einem der Ansprüche 12 bis 17,
**dadurch gekennzeichnet, dass**
Polanschlüsse (22, 23) der Batteriezellen (2 bis 7) paarweise ultraschallverschweißt werden.

19. Verfahren nach Anspruch 18,
**dadurch gekennzeichnet, dass**
mehrere paarweise verschweißte Polanschlüsse (22, 23) zu vielfach verschweißten Hauptanschlüssen ultraschallverschweißt werden.

20. Verfahren nach Anspruch 18 oder Anspruch 19,
**dadurch gekennzeichnet, dass**
Abgriffe für eine Batteriezellenüberwachung auf die paarweise verschweißten Polanschlüsse (22, 23) mittels Ultraschall aufgeschweißt werden.

## Claims

1. Battery with battery cells (2 to 7), comprising:
- a multiplicity of battery cell stacks (8 to 19) which are connected in series, wherein one battery cell stack (8 to 19) has a single battery cell or battery cells (2, 3; 4, 5) which are connected in parallel;
- sensors (20) for monitoring the state of charge of individual battery cells (2 to 7) or individual battery cell stacks (8 to 19) or individual pairs of battery cells (2, 3; 4, 5) or individual pairs of battery cell stacks (8, 9; 10, 11) and
- a charge compensation apparatus (21);
wherein the charge compensation apparatus (21) has a target value table of the permissible state of charge of individual battery cells (2 to 7) and is connected to the sensors for monitoring the state of charge and comprises means for interrupting the charge compensation when a target value for the state of charge of individual battery cells (2 to 7) is reached, wherein pole terminals (22, 23) of the battery cells (2 to 7) or of the battery cell stacks (8 to 19) are welded to one another in pairs by means of welding faces, and wherein charge compensation lines are electrically connected to the welding faces, **characterized in that** the pole terminals (22, 23) which are welded in pairs comprise an additional ultrasonic welded connection to the charge compensation lines, wherein the weld of this additional welded connection extends over a surface of 5 - 50 mm².

2. Battery according to Claim 1,
**characterized in that**
the charge compensation apparatus (21) controls the states of charge of the battery cells (2 to 7), so that the states of charge of the battery cells (2 to 7) are approximated to one another.

3. Battery according to Claim 1 or according to Claim 2,
**characterized in that**
a state of charge voltage curve of the overall system of the battery (1) is stored in the charge compensation apparatus (21).

4. Battery according to one of the preceding claims,
**characterized in that**
the series connection comprises up to a thousand battery cells (2 to 7), preferably up to one hundred battery cells (2 to 7), and wherein the battery (1) comprises up to 50 battery cells (2 to 7), preferably two to four battery cells (2 to 7) per parallel connection.

5. Battery according to one of the preceding claims,
**characterized in that**
mechanical fabrication tolerances are compensated during the arrangement of battery cells in a battery housing (30) by means of the pole terminals (22, 23) which are welded in pairs.

6. Battery according to Claim 5,
**characterized in that**
the battery cells are electrically connected by means of a cable harness (25) or by means of a flexboard or by means of a collective printed circuit board with CSMs (cell supervision modules) or with CSCs (cell supervision circuits).

7. Battery according to one of the preceding claims,
**characterized in that**
the battery (1) has prismatic lithium ion cells.

8. Battery according to one of the preceding claims,
**characterized in that**
the battery (1) has cell monitoring modules (26, 27), wherein an individual cell monitoring module (26) comprises an integrated circuit with cell monitoring circuits (28).

9. Battery according to one of the preceding claims,
**characterized in that**
pole terminals (22, 23) of the battery cells (2 to 7) are ultrasonic welded in pairs.

10. Battery according to Claim 9,
**characterized in that**
a plurality of pole terminals (22, 23) which are welded in pairs are ultrasonic welded to form main connections which are welded multiply.

11. Battery according to Claim 9 or Claim 10,
**characterized in that**
taps for the battery cell monitoring are ultrasonic welded to the pole terminals (22, 23) which are welded in pairs.

12. Method for manufacturing a battery (1) having a multiplicity of battery cells (2 to 7), wherein the method comprises the following method steps:
- installation of battery cells in a battery housing (30);
- manufacturing welded connections (29) in pairs between pole terminals (22, 23) of battery cells (2 to 7), wherein identical battery cell pole terminals (22) are welded to one another in a planar fashion in the case of parallel connections, or battery cell pole terminals (22, 23) with opposite polarities are welded to one another in a planar fashion, to form series connections;
- manufacturing a cable harness or a flexboard or a collective printed circuit board with battery monitoring circuits (28) or CSCs or battery cell monitoring modules (26, 27) or CSMs of a charge compensation apparatus with charge compensation lines (24) which have taps;
- welding the taps of the charge compensation lines (24) for the individual monitoring of battery cells to the paired welded connections of the pole terminals (22, 23);
- connecting battery external terminals (31) to pole terminals of the end cells of the battery,
**characterized in that**
when the taps of the charge compensation lines are welded on an ultrasonic weld with an area of 5 - 50 mm² is provided.

13. Method according to Claim 12,
**characterized in that**
the charge compensation apparatus (21) varies the states of charge of the battery cells (2 to 7) in such a way that the states of charge of the battery cells (2 to 7) are approximated to one another.

14. Method according to Claim 12 or Claim 13,
**characterized in that**
a state of charge voltage curve of the overall system of the battery (1) is stored in the charge compensation apparatus (21).

15. Method according to one of Claims 12 to 14,
**characterized in that**
up to a thousand battery cells (2 to 7), preferably up to one hundred battery cells (2 to 7), are welded to one another in a series connection (33) and up to 50 battery cells (2 to 7), preferably two to four battery cells (2 to 4), are welded to one another in a parallel connection (32).

16. Method according to one of Claims 12 to 15,
**characterized in that**
each battery cell (2 to 7) is connected to CSMs or CSCs by means of a cable harness (25), by means of a flexboard or by means of a collective printed circuit board in order to detect and/or compensate the state of charge of the battery cell (2 to 7).

17. Method according to one of Claims 12 to 16,
**characterized in that**
lithium ion cells are used as battery cells (2 to 7), as flat cells in aluminium composite film packaging, the states of charge of which are detected by cell monitoring circuits (28) and approximated.

18. Method according to one of Claims 12 to 17,
**characterized in that**
pole terminals (22, 23) of the battery cells (2 to 7) are ultrasonic welded in pairs.

19. Method according to Claim 18,
**characterized in that**
a plurality of pole terminals (22, 23) which are welded in pairs are ultrasonic welded to form multiply welded main connections.

20. Method according to Claim 18 or Claim 19,
**characterized in that**
taps for battery cell monitoring are welded onto the pole terminals (22, 23) which are welded in pairs by means of ultrasound.

## Revendications

1. Batterie munie de cellules de batterie (2 à 7), comportant :
- une pluralité d'empilements de cellules de batterie (8 à 19) montée en série, un empilement de cellules de batterie (8 à 19) comportant une seule cellule de batterie ou des cellules de batterie (2, 3 ; 4, 5) montées en parallèle ;
- des capteurs (20) pour la surveillance de l'état de charge de certaines cellules de batterie (2 à 7) ou de certains empilements de cellules de batterie (8 à 19) ou de certaines paires de cellules de batterie (2, 3 ; 4, 5) ou de certaines paires d'empilements de cellules de batterie (8, 9 ; 10, 11) et
- un dispositif d'équilibrage de charge (21) ;
le dispositif d'équilibrage de charge (21) comportant un tableau de valeurs cibles de l'état de charge admissible de certaines cellules de batterie (2 à 7) et étant relié aux capteurs pour la surveillance de l'état de charge et comportant des moyens permettant d'interrompre l'équilibrage de charge lorsqu'une valeur cible pour l'état de charge de certaines cellules de batterie (2 à 7) est atteinte, les bornes polaires (22, 23) des cellules de batterie (2 à 7) ou l'empilement de cellules de batterie (8 à 19) étant soudés entre eux par paires à l'aide de surfaces de soudure et des lignes d'équilibrage de la charge étant reliées électriquement aux surfaces de soudure, **caractérisée en ce que** les bornes polaires (22, 23) soudés par paires avec les lignes d'équilibrage de la charge comportent une liaison supplémentaire soudée par ultrasons, la soudure par ultrasons de cette liaison soudée supplémentaire s'étendant sur une surface de 5 à 50 mm².

2. Batterie selon la revendication 1,
**caractérisée en ce que** le dispositif d'équilibrage de la charge (21) commande les états de charge des cellules de batterie (2 à 7), de sorte que les états de charge des cellules de batterie (2 à 7) sont identiques entre eux.

3. Batterie selon la revendication 1 ou 2,
**caractérisée en ce qu'**une courbe de tension d'état de charge du système global de la batterie (1) est enregistrée dans le dispositif d'équilibrage de la charge (21).

4. Batterie selon l'une quelconque des revendications précédentes,
**caractérisée en ce que** le montage en série comprend jusqu'à mille cellules de batterie (2 à 7), de préférence jusqu'à cent cellules de batterie (2 à 7) et la batterie (1) comportant jusqu'à 50 cellules de batterie (2 à 7), de préférence de deux à quatre cellules de batterie (2 à 7) par montage en parallèle.

5. Batterie selon l'une quelconque des revendications précédentes,
**caractérisée en ce que** les tolérances de fabrication mécaniques sont compensées lors de la disposition de cellules de batterie dans un boîtier de batterie (30) par les bornes polaires (22, 23) soudés par paires.

6. Batterie selon la revendication 5,
**caractérisée en ce que** les cellules de batterie sont reliées électriquement par un faisceau de câbles (25) ou par un flexboard ou par un circuit imprimé avec des CSM (*cell supervision modules*) ou avec des CSC (*cell supervision* circuits).

7. Batterie selon l'une quelconque des revendications précédentes,
**caractérisée en ce que** la batterie (1) comporte des cellules lithium-ion prismatiques.

8. Batterie selon l'une quelconque des revendications précédentes,
**caractérisée en ce que** la batterie (1) comporte des modules de surveillance de cellules (26, 27), un module de surveillance de module (26) comprenant un circuit intégré avec des circuits de surveillances de cellules (28).

9. Batterie selon l'une quelconque des revendications précédentes,
**caractérisée en ce que** les bornes polaires (22, 23) des cellules de batterie (2 à 7) sont soudés par paires par ultrasons.

10. Batterie selon la revendication 9,
**caractérisée en ce que** plusieurs bornes polaires (22, 23) soudés par paires sont soudés par ultrasons aux principales bornes soudées plusieurs fois.

11. Batterie selon la revendication 9 ou 10,
**caractérisée en ce que** des capteurs de surveillance des cellules de batterie sont soudés par ultrasons aux bornes polaires (22, 23) soudés par paires.

12. Procédé de fabrication d'une batterie (1) dotée d'une pluralité de cellules de batterie (2 à 7), ce procédé comportant les étapes de procédé suivantes :
- insertion de cellules de batterie dans un boîtier de batterie (30) ;
- établissement par paires de liaisons soudées (29) entre les bornes polaires (22, 23) des cellules de batterie (2 à 7), les bornes polaires (22) de cellules de batterie identiques étant soudés entre eux sur toute leur surface lors de montages en parallèle ou de bornes polaires (22, 23) de cellules de batterie de polarités inverses pour des montages en série ;
- établissement d'un faisceau de câbles ou d'un flexboard ou d'un circuit imprimé avec des circuits de surveillance de batterie (28) ou des CSC ou des modules de surveillance des cellules de batterie (26, 27) ou des CSM d'un dispositif d'équilibrage de la charge avec des lignes d'équilibrage de la charge (24), qui comportent des capteurs ;
- soudure des capteurs des lignes d'équilibrage de la charge (24) pour la surveillance individuelle des cellules de batterie aux liaisons soudées par paires des bornes polaires (22, 23) ;
- raccordement des bornes externes de la batterie (31) aux bornes polaires des cellules terminales de la batterie, **caractérisée en ce que**, lors de la soudure des capteurs des lignes d'équilibrage de la charge, une soudure par ultrasons présentant une surface de 5 à 50 mm² est prévue.

13. Procédé selon la revendication 12,
**caractérisé en ce que** le dispositif d'équilibrage de la charge (21) modifie les états de charge des cellules de batterie (2 à 7) de sorte que les états de charge des cellules de batterie (2 à 7) sont équilibrés entre eux.

14. Procédé selon la revendication 12 ou la revendication 13,
**caractérisé en ce qu'**une courbe de tension d'état de charge du système global de la batterie (1) est enregistrée dans le dispositif d'équilibrage de la charge (21).

15. Procédé selon l'une quelconque des revendications 12 à 14,
**caractérisé en ce que** jusqu'à mille cellules de batterie (2 à 7), de préférence jusqu'à cent cellules de batterie (2 à 7) sont soudées selon un montage en série (33) et jusqu'à 50 cellules de batterie (2 à 7), de préférence de deux à quatre cellules de batterie (2 à 4) sont soudées entre elles selon un montage en parallèle (32).

16. Procédé selon l'une quelconque des revendications 12 à 15,
**caractérisé en ce que** chaque cellule de batterie (2 à 7) est reliée par un faisceau de câbles (25), par un flexboard ou par un circuit imprimé pour la détection et/ou l'équilibrage de l'état de charge de la cellule de batterie (2 à 7) avec des CSM ou des CSC.

17. Procédé selon l'une quelconque des revendications 12 à 16,
**caractérisé en ce que**, en tant que cellules de batterie (2 à 7), des cellules lithium-ion sont utilisées sous la forme de cellules plates dans un emballage en film composite d'aluminium, dont les états de charge sont détectés et équilibrés par des circuits de surveillance des cellules (28).

18. Procédé selon l'une quelconque des revendications 12 à 17,
**caractérisé en ce que** les bornes polaires (22, 23) de cellules de batterie (2 à 7) sont soudés par paires par ultrasons.

19. Procédé selon la revendication 18,
**caractérisé en ce que** plusieurs bornes polaires (22, 23) soudés par paires sont soudés par ultrasons aux principales bornes soudées plusieurs fois.

20. Procédé selon la revendication 18 ou la revendication 19,
**caractérisé en ce que** des capteurs pour une surveillance des cellules de batterie sont soudés par ultrasons sur les bornes polaires (22, 23) soudées par paires.
